# FASCICULE DE BREVET EUROPEEN

(11) **EP 1 991 446 B1**
(45) Date de publication et mention de la délivrance du brevet: **06.04.2011**
(21) Numéro de dépôt: 07731637.0
(22) Date de dépôt: 16.02.2007
(51) Int. Cl.: B60R 19/20

(54) **AGENCEMENT DE BANDEAU POUR PORTE LATERALE DE VEHICULE AUTOMOBILE ET VEHICULE AUTOMOBILE COMPRENANT UN TEL AGENCEMENT**
ABGLEICHSANORDNUNG FÜR DIE SEITENTÜR EINES KRAFTFAHRZEUGS UND KRAFTFAHRZEUG MIT EINER SOLCHEN ANORDNUNG
MOTOR VEHICLE SIDE DOOR TRIM ARRANGEMENT AND MOTOR VEHICLE COMPRISING SUCH AN ARRANGEMENT

(30) Priorité: 07.03.2006 FR 0650781
(43) Date de publication de la demande: 19.11.2008
(73) Titulaire: RENAULT S.A.S., 92100 Boulogne Billancourt (FR)
(72) Inventeur: HENAUX, Jean-Marc, F-92340 Bourg La Reine (FR)
(86) Numéro de dépôt international: PCT/FR2007/050812
(87) Numéro de publication internationale: WO 2007/101953

(56) Documents cités:
- WO-A-98/50254
- DE-A1- 10 321 293
- FR-A- 2 798 633
- US-A- 4 815 777

## Description

### DOMAINE TECHNIQUE

La présente invention se rapporte de façon générale à un agencement de bandeau pour porte latérale de véhicule automobile, ce type d'agencement comportant habituellement un bandeau longitudinal destiné à renforcer la résistance aux chocs latéraux et frontaux d'une porte latérale équipée d'un tel agencement.

L'invention se rapporte également à une porte latérale de véhicule automobile comportant un tel agencement de bandeau.

### ETAT DE LA TECHNIQUE ANTERIEURE

Dans ce domaine technique, plusieurs réalisations ont déjà été proposées. Parmi ces réalisations de l'art antérieur, il a récemment été proposé l'emploi d'un bandeau longitudinal déployable pour remplacer le bandeau de porte traditionnel, afin de réduire l'épaisseur de celui-ci, et donc d'augmenter le volume d'habitabilité du véhicule.

Avec un tel agencement, lorsqu'un choc frontal ou latéral est détecté, une consigne est délivrée de manière à ce que le bandeau se déploie par gonflage à l'aide de moyens pyrotechniques embarqués dans ce même bandeau. Le déploiement observé lui permet alors de retrouver une forme classique plus volumineuse, mieux capable de reprendre les efforts liés au choc. En particulier, dans le cas non limitatif d'une porte latérale avant, ce bandeau longitudinal est généralement destiné, en cas de choc frontal, à entrer en contact à ses deux extrémités avant et arrière respectivement avec le pied avant de montant et le pied milieu de montant de la caisse du véhicule, vers laquelle les efforts peuvent donc être transmis.

L'augmentation du volume d'habitabilité du véhicule, résultant de la diminution de l'épaisseur du caisson de porte permise par la mise en place du bandeau déployable, est essentiellement recherchée pour pouvoir déployer des airbags latéraux plus volumineux, qui assurent naturellement une meilleure protection de l'occupant du véhicule en cas de choc survenant sur celui-ci.

Le bandeau déployable, qui est indifféremment destiné à être utilisé avec un système de détection classique ou avec un système de détection dit « pré-crash » permettant d'assurer le déploiement du bandeau avant que le choc ne survienne sur le véhicule, est généralement positionné vers l'intérieur de la porte par rapport à la portion de la vitre située dans le caisson de porte comme le montre le document FR-A-2907050, qui divulgue le préambule de la revendication 1.

Ainsi, cette contrainte d'encombrement liée à la présence de la vitre au sein du caisson de porte, associée au fait que les bandeaux déployables connus de l'art antérieur se déploient habituellement à la fois vers l'intérieur et vers l'extérieur de la porte, implique que les caissons de porte intégrant de tels bandeaux déployables continuent à présenter des dimensions transversales qui ne sont pas totalement optimisées. Cela s'explique notamment par le fait que la paroi intérieure du caisson doit être suffisamment éloignée du bandeau se trouvant dans son état non déployé, afin d'éviter de gêner un éventuel déploiement ultérieur vers l'intérieur de ce dernier.

De ce fait, il est clair que le surdimensionnement qui subsiste au niveau de l'épaisseur du caisson de porte se traduit directement par une limitation du volume de l'habitacle, et par conséquent par l'impossibilité de mettre en oeuvre des airbags de volume important, pourtant nécessaires à une protection optimisée de l'occupant du véhicule.

### EXPOSÉ DE L'INVENTION

L'invention a donc pour but de proposer un agencement de bandeau pour porte latérale de véhicule automobile remédiant au moins partiellement au problème mentionné ci-dessus, relatif aux réalisations de l'art antérieur.

Pour ce faire, l'invention a tout d'abord pour objet un agencement de bandeau pour porte latérale de véhicule automobile, comprenant un bandeau longitudinal de porte formant structure déployable. Selon l'invention, il comprend en outre un renfort longitudinal de bandeau formant logement pour le bandeau de porte, ce logement présentant un fond et une ouverture s'étendant chacun le long de ce bandeau.

Ainsi, l'invention propose donc l'adjonction d'un renfort de bandeau qui s'étend sensiblement dans la même direction que le bandeau déployable, et qui est par conséquent capable de fournir une résistance mécanique supplémentaire en cas de choc frontal ou latéral survenant sur le véhicule. Par ailleurs, il remplit également une fonction de support pour le bandeau déployable, étant donné qu'il forme un logement au sein duquel est agencé ce même bandeau.

L'une des particularités de la présente invention réside donc dans le fait que le fond du logement, défini par le renfort et qui s'étend tout comme l'ouverture de ce logement le long du bandeau déployable, permet de limiter/d'interdire le déploiement de ce dernier dans la direction de ce même fond de logement. En revanche, l'ouverture du logement, qui est également longitudinale, à savoir s'étendant dans la même direction que celle du bandeau, assure une direction de déploiement privilégiée pour ce bandeau déployable, car celui-ci sera effectivement forcé de se déployer dans un sens allant du fond vers l'ouverture du logement dans lequel il est agencé. Au vu de ce qui précède, il doit donc être compris que le déploiement du bandeau amène celui-ci à s'étendre essentiellement en dehors du logement dans lequel il est agencé lorsqu'il se trouve dans son état normal non déployé.

A cet égard, il est noté que le déploiement du bandeau vient également provoquer un plaquage de ce dernier contre le fond du logement, bien évidemment seulement dans le cas non limitatif envisagé où ce plaquage n'était pas déjà existant dans l'état non déployé. En tout état de cause, il est rappelé comme cela a été évoqué ci-dessus que le fond constitue un obstacle permettant de limiter/d'interdire le déploiement du bandeau dans le sens allant de l'ouverture vers ce fond de logement, puisque le renfort intégrant ce fond n'est bien entendu pas destiné à se déformer durant le déploiement du bandeau.

Lorsque cet agencement de bandeau est intégré à une porte latérale de véhicule automobile, on fait en sorte qu'il soit agencé d'une façon permettant un déploiement du bandeau essentiellement vers l'extérieur de cette porte, voire exclusivement dans cette même direction. Ainsi, l'invention a également pour objet une porte latérale de véhicule automobile comportant un agencement de bandeau tel que celui décrit ci-dessus et étant disposé de manière à ce que le fond du logement soit orienté vers un côté intérieur de la porte, et de manière à ce que l'ouverture du logement soit orientée vers un côté extérieur de cette porte.

Le bandeau étant agencé pour se déployer essentiellement voire exclusivement vers l'extérieur de cette porte, il n'est donc avantageusement plus nécessaire d'éloigner la paroi intérieure du caisson du bandeau se trouvant dans son état normal non déployé, car la direction privilégiée de déploiement implique que cette paroi intérieure n'est plus susceptible de constituer une gêne pour un éventuel déploiement ultérieur du bandeau.

Pour cette raison, la paroi intérieure du caisson de porte peut être agencée au plus prêt de l'agencement de bandeau, impliquant alors une réduction des dimensions transversales de ce même caisson. Ainsi, cette constatation se traduit avantageusement car le fait que le volume d'habitabilité du véhicule peut être augmenté, ouvrant par conséquent la possibilité de mettre en oeuvre des airbags de grande dimension, renforçant la protection de l'occupant du véhicule par rapport à celle rencontrée dans les réalisations de l'art antérieur.

De préférence, la porte comporte donc un caisson de porte à l'intérieur duquel est monté fixement le renfort longitudinal de l'agencement de bandeau, et comprend en outre une vitre pénétrant dans ce caisson de porte et disposée en regard de l'agencement, de manière à être située plus vers l'extérieur de la porte que cet agencement. Dans un tel cas, l'agencement est donc situé entre une paroi intérieure du caisson de porte et une partie de la vitre située à l'intérieur de ce même caisson, au moins lorsque cette vitre est en position ouverte.

Toujours de manière préférentielle, l'agencement de bandeau est agencé de manière à ce qu'un déploiement du bandeau longitudinal entraîne une percussion de la vitre par ce même bandeau. En effet, il est souhaitable que le bandeau percute la vitre en se déployant dans la direction privilégiée allant du fond vers l'ouverture du logement, afin de briser cette vitre. A ce titre, il est prévu que le bandeau continue à se déployer vers l'extérieur de la porte au-delà de cette vitre après avoir percuté et brisé cette dernière, jusqu'à ce qu'il arrive par exemple à proximité de la paroi extérieure du caisson. Il est noté que dans le cas non limitatif de l'emploi d'un système de détection du type pré-crash, l'avantage conféré par une telle configuration réside dans le fait de pouvoir briser la vitre avant que le véhicule ne subisse le choc détecté, ce qui améliore considérablement la protection de l'occupant du véhicule.

De façon préférée, le fond de logement de l'agencement de bandeau comporte le long du bandeau longitudinal de porte une zone centrale de part et d'autre de laquelle se trouvent deux zones d'extrémité, le fond disposant d'une forme cintrée rapprochant la partie centrale de l'ouverture.

Le cintrage opéré sur le fond du logement, visant à lui donner une courbure/un profil l'éloignant d'un centre du véhicule en s'approchant de son milieu considéré selon la direction longitudinale du renfort, offre non seulement la possibilité d'agrandir encore davantage le volume de l'habitacle du véhicule, mais permet également de donner une forme sensiblement identique au bandeau déployé épousant ce même fond. Ainsi, ce bandeau présente avantageusement une forme sensiblement arquée vers l'extérieur lorsqu'il est dans son état déployé, ce qui lui permet de limiter fortement les risques de flambage auxquels il est confronté durant le choc, alors qu'il dispose de préférence d'une forme droite dans son état non déployé.

A ce titre, on prévoit qu'en position normale où le bandeau n'a pas été déployé, celui-ci est au moins partiellement en contact avec le fond du logement. Il est par exemple fait en sorte que le bandeau droit non déployé soit uniquement en contact avec la zone centrale du fond rapprochée de l'ouverture, et donc éloigné des deux zones d'extrémité de celui-ci du fait de la forme cintrée vers l'extérieur de ce même fond. Alternativement, il est possible de prévoir que le bandeau non déployé dispose d'une paroi intérieure également cintrée afin d'épouser, sur une grande partie ou sur toute sa longueur, le fond du logement défini par le renfort longitudinal. D'une façon plus générale, on peut prévoir que le fond du logement et la paroi intérieure du bandeau disposent de formes sensiblement complémentaires de manière à pouvoir s'épouser mutuellement, ces formes pouvant alors indifféremment être droites, cintrées, etc.

Toujours de manière préférentielle, le bandeau longitudinal de porte comporte une paroi intérieure située à d'intérieur du logement, sans contact ou bien en contact partiel ou intégral avec le fond de logement comme évoqué ci-dessus, ainsi qu'une paroi extérieure située extérieurement par rapport à ce même logement. De cette manière, il doit donc être compris que le bandeau fait déjà saillie hors du logement avant son déploiement. Ainsi, du fait de la direction privilégiée de déploiement, le volume du bandeau faisant saillie de l'ouverture est bien plus important après qu'avant, le déploiement de ce même bandeau. Naturellement, il serait également possible de prévoir que la paroi extérieure soit située à l'intérieur du logement dans l'état non déployé du bandeau, sans sortir du cadre de l'invention, même si cette solution apparaît plus contraignante d'un point de vu encombrement engendré. Néanmoins, il est bien évidemment très préférentiellement recherché à obtenir un bandeau déployé faisant saillie de l'ouverture du logement, quelque soit le positionnement de sa paroi extérieure avant déploiement vis-à-vis de cette ouverture s'étendant dans tous les cas le long du bandeau, en étant ou non traversée par ce dernier. A cet égard, il est précisé que l'ouverture s'étend le long du bandeau déployable, c'est-à-dire selon la direction longitudinale de ce bandeau, sur préférentiellement toute la longueur de celui-ci.

Préférentiellement, le renfort longitudinal comporte une portion centrale longitudinale formant le logement et présentant en section transversale sensiblement la forme d'un U, et ce renfort longitudinal comporte en outre deux portions d'extrémité longitudinales respectivement raccordées aux deux extrémités libres du U, ces deux portions d'extrémité longitudinales étant notamment destinées à assurer le montage de l'agencement sur le caisson de porte.

De préférence, le bandeau longitudinal de porte est monté fixement sur les deux portions d'extrémité longitudinales du renfort.

D'autre part, on peut faire en sorte que les deux portions d'extrémité longitudinales soient conçues de manière à ce que le renfort présente, en section transversale, sensiblement la forme d'un ligne comprenant plusieurs creux/créneaux se succédant, parmi lesquels on compte donc préférentiellement le U du logement. Cette spécificité permet d'obtenir un renfort dont la forme des extrémités avant et arrière présentant une telle section assure aisément la conservation des contact avec les pieds de montant de la caisse, durant un choc frontal survenant sur le véhicule. En effet, cette forme particulière de creux/créneaux se succédant permet de limiter considérablement les risques de glissement latéral de ces extrémités par rapport aux pieds de montant susmentionnés, du fait de la grande rigidité et de l'importante résistance à la compression longitudinale.

Par ailleurs, le bandeau longitudinal de porte formant structure déployable est muni d'un actionneur pyrotechnique, pour le gonflage de ce bandeau. Néanmoins, tout autre type d'actionneur connu de l'homme du métier et permettant d'assurer le déploiement du bandeau peut être envisagé, sans sortir du cadre de l'invention.

Enfin, l'invention a également pour objet un véhicule automobile comportant au moins une telle porte latérale, cette porte pouvant indifféremment être une porte latérale avant ou arrière, gauche ou droite. De préférence, la totalité des portes latérales de ce véhicule sont conçues de la manière exposée ci-dessus, spécifique à la présente invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- les figures 1a et 1b représentent des vues en coupe d'une porte latérale de véhicule automobile selon un mode de réalisation préféré de la présente invention, l'agencement de bandeau équipant cette porte n'étant montré que schématiquement, respectivement dans un état normal non déployé et dans un état déployé ;
- la figure 2 représente une vue plus détaillée en perspective de l'agencement de bandeau montré sur les figures 1a et 1b ;
- la figure 3 représente une vue similaire à celle de la figure 2, selon un autre angle de vue ;
- la figure 4 représente une vue en perspective du renfort longitudinal de bandeau appartenant à l'agencement montré sur les figures 2 et 3 ;
- la figure 5 représente une vue en coupe longitudinale prise selon le plan P3 de la figure 4 ;
- les figures 6a et 6b représentent des vues en coupe prises respectivement selon, les plans P1 et P2 de la figure 2 ; et
- les figures 7a et 7b représentent des vues similaires à celles montrées sur les figures 6a et 6b, le bandeau de porte étant représenté dans un état déployé.

### EXPOSÉ DÉTAILLÉ D'UN MODE DE RÉALISATION PRÉFÉRÉ

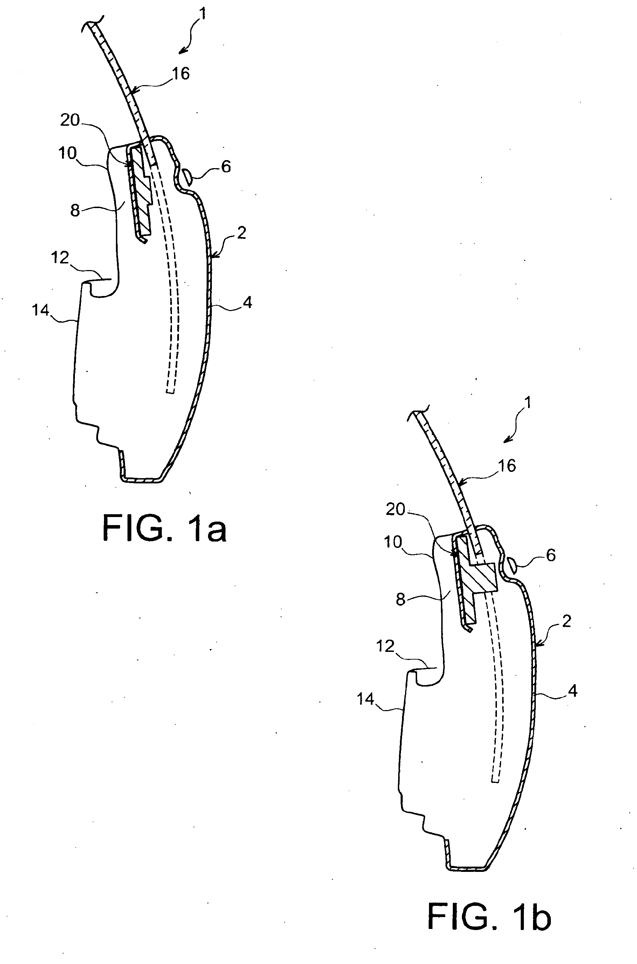

En référence aux figures 1a et 1b, on peut apercevoir une porte latérale 1 de véhicule automobile selon un mode de réalisation préféré de la présente invention.

Cette porte 1 comprend un caisson de porte 2 globalement formé par un panneau extérieur également dit paroi extérieure 4 sur laquelle est montée une poignée de porte 6, ainsi que par un panneau intérieur également dit paroi intérieure 8, ces panneaux 4, 8 étant généralement constitués par des tôles métalliques.

D'autre part, la porte 1 comprend une garniture supérieure 10, une zone d'accoudoir 12 et une garniture inférieure 14 rapportées sur le caisson 2 de manière à délimiter l'habitacle du véhicule intégrant cette porte.

La porte 1 comprend également une vitre 16 qui pénètre partiellement à l'intérieur du caisson 2, comme cela est visible sur la figure 1a. A titre indicatif, la course de la partie inférieure de la vitre 16 entre une position de fermeture et une position d'ouverture est montrée en pointillés sur les figures 1a et 1b. A cet égard, il est noté qu'en position de fermeture, seule la partie inférieure de la vitre est située dans le caisson, tandis qu'en position d'ouverture, la quasi-totalité de cette vitre est située à l'intérieur de ce même caisson.

L'une, des particularités de la présente invention concerne la présence d'un agencement de bandeau 20 uniquement représenté schématiquement et qui sera décrit en détails ci-après, cet agencement 20 étant monté fixement sur le caisson de porte 2, comme par exemple sur le panneau intérieur 8 tel que cela est montré sur la figure 1a.

Globalement et comme cela sera exposé ci-dessous, l'agencement 20 comporte un bandeau longitudinal de porte formant structure déployable, ainsi qu'un renfort de bandeau formant logement pour ce même bandeau. Il est noté que le bandeau déployable employé peut être du type connu de l'homme du métier, sa fonction étant de rigidifier le caisson de porte et donc de participer à l'absorption de l'énergie lors d'un choc latérale ou frontal survenant sur le véhicule.

Effectivement, lorsqu'un tel choc est détecté, par un système de détection classique ou par un système de détection pré-crash non représenté mais pouvant appartenir à la porte 1 objet de l'invention, une consigne est délivrée de manière à ce que le bandeau se déploie par gonflage à l'aide de moyens pyrotechniques embarqués dans ce même bandeau, et appartenant à l'agencement 20. Le déploiement observé lui permet alors de retrouver une forme classique plus volumineuse, mieux capable de reprendre les efforts liés au choc.

On peut voir sur la figure 1a que l'agencement de bandeau 20 est situé entre la paroi intérieure 8 du caisson de porte et la partie de la vitre 16 située à l'intérieur de ce caisson, impliquant par conséquent que cette vitre 16 est située plus vers l'extérieur de la porte que l'agencement 20.

De plus, l'agencement 20 est positionné au sein du caisson 2 d'une manière particulière permettant au bandeau de se déployer essentiellement voire exclusivement en direction de l'extérieur de la porte, à savoir vers la vitre 16 ou encore de sorte que le fond du logement de bandeau défini par le renfort soit orienté vers un côté intérieur de la porte, donc vers le panneau intérieur 8, et de sorte que l'ouverture de ce même logement soit orientée vers un côté extérieur de la porte, c'est-à-dire vers le panneau extérieur 4.

Du fait de la disposition précitée, l'agencement de bandeau permet en se déployant vers l'extérieur d'entraîner une percussion de la vitre à l'aide de ce même bandeau, dans le but de briser cette dernière, au moins lorsque celle-ci se trouve en position d'ouverture. A ce titre, comme cela est schématisé sur la figure 1b, il est prévu que le bandeau continue à se déployer vers l'extérieur de la porte au-delà de cette vitre après avoir percuté et brisé celle-ci, jusqu'à ce qu'il arrive à proximité du panneau extérieur 4 du caisson.

Enfin, il est noté que l'agencement 20 s'étend de l'avant vers l'arrière sensiblement selon la direction longitudinale du véhicule, également assimilable à la direction longitudinale de la porte, de préférence approximativement sur toute la longueur du caisson de porte. De cette manière, lors d'un choc frontal survenant sur le véhicule et dans le cas non limitatif d'une porte latérale avant, l'agencement 20 est destiné à entrer en contact à ses deux extrémités avant et arrière respectivement avec le pied avant de montant et le pied milieu de montant de la caisse du véhicule, vers laquelle les efforts peuvent donc être transmis. Durant un tel contact, l'agencement 20 se trouve situé sensiblement orthogonalement aux deux pieds de montant précités avec lesquels il est préalablement entré en contact.

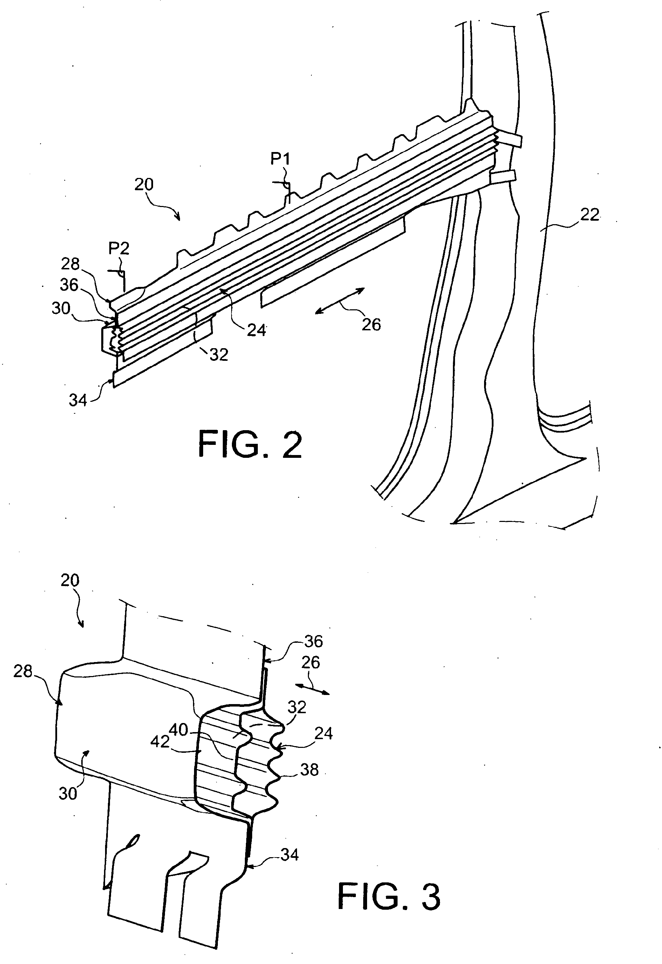

En référence à présent aux figures 2 et 3, on peut apercevoir en détails l'agencement de bandeau 20, qui se présente sous la forme d'un mode de réalisation préféré de la présente invention. Sur la figure 2, le pied milieu de montant 22 de la caisse du véhicule a été montré à titre indicatif, pour un agencement 22 destiné à équiper la porte avant gauche de ce véhicule.

Comme mentionné ci-dessus, cet agencement 20 comporte tout d'abord un bandeau longitudinal de porte 24 formant structure déployable, ce bandeau 24 s'étendant donc selon une direction longitudinale 26, qui est assimilable à une direction longitudinale de la porte et du véhicule lorsque le bandeau est en place sur le caisson de porte 2 comme cela est montré sur les figures 1a et 1b. De préférence, le bandeau s'étend de façon droite, à savoir de manière cylindrique le long de la direction 26. Ce bandeau 24 pouvant prendre la forme d'un bandeau connu de l'art antérieur intègre un actionneur pyrotechnique (non représenté) embarqué en son sein afin de pouvoir provoquer un déploiement par gonflage du bandeau. Tout type d'actionneur connu de l'homme du métier permettant de libérer des gaz, de nature pyrotechnique ou non, peut être envisagé en combinaison avec le bandeau en vu d'un gonflage de ce dernier, sans sortir du cadre de l'invention.

D'autre part, l'agencement 20 comprend un renfort de bandeau 28 s'étendant également selon la direction 26, de préférence sur une longueur identique ou similaire à celle du bandeau 24. Le renfort 28 prend de préférence la forme d'une tôle métallique, et est par exemple obtenu par emboutissage.

Le renfort 28 a la particularité de comporter une portion centrale longitudinale 30, à savoir s'étendant selon la direction 26, qui forme un logement 32 pour le bandeau 24. Pour ce faire, cette portion centrale 30 dispose en section transversale, c'est-à-dire selon un plan orthogonal à la direction 26, d'une forme de U propice au logement du bandeau 24 de forme préférentiellement cylindrique.

Par ailleurs, au-dessus et en dessous de cette portion centrale 30, le renfort présente deux portions d'extrémité longitudinales 36, 34. respectivement raccordées aux deux extrémités libres du U précité. Il est précisé que ces deux portions 34, 36, s'étendant également selon la direction 26, sont destinées à assurer le montage du renfort 28 sur le caisson de porte 2 de la porte associée, et plus préférentiellement sur le panneau intérieur de ce caisson, par exemple en étant soudés à ce dernier.

Plus particulièrement en référence à la figure 3, on peut voir que le bandeau 24 est par exemple constitué par une paroi extérieure 38 et une paroi intérieure 40, toutes les deux longitudinales et raccordées l'une à l'autre au niveau de leurs extrémités inférieures et supérieures s'étendant selon la direction 26, ces extrémités étant également montées fixement sur les portions d'extrémité longitudinales 34, 36 du renfort 28. De ce fait, il doigt être compris que la paroi intérieure 40 est située à l'intérieur du logement, en contact ou non avec un fond 42 de ce dernier, tandis que la paroi extérieure 38 est quant à elle préférentiellement située en dehors de ce logement 32, c'est-à-dire placée au-delà d'une ouverture de celui-ci. A titre d'exemple indicatif, ces parois 38, 40 sont du type tôles ondulées, les ondulations s'étendant parallèlement à la direction 26.

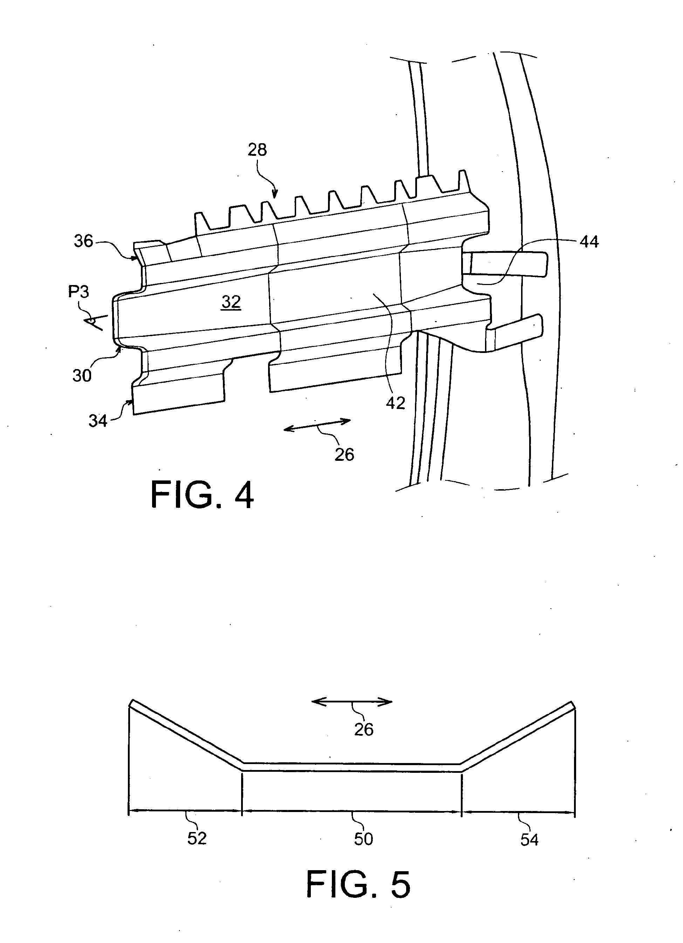

En référence aux figures 4 et 5, il est montré de façon plus détaillée le renfort de bandeau 28, qui présente donc le fond 42 s'étendant le long du bandeau (non représenté) dans la direction 26, ainsi qu'une ouverture 44 définie entre les deux extrémités libres du U de la portion centrale 30 et s'étendant également le long du bandeau selon la direction 26.

Plus précisément, on peut voir que le fond 42 ne s'étend de préférence pas exactement selon la direction 26, mais dispose d'une forme cintrée rapprochant la zone centrale de ce fond, considérée selon la direction 26, de l'ouverture 44. Ce cintrage, dont le but est d'obtenir une courbure/un profil allant transversalement vers l'extérieur du véhicule entre les extrémités avant et arrière du fond 42, permet de diminuer encore davantage l'épaisseur du caisson de porte, et donc d'augmenter le volume d'habitabilité du véhicule.

Pour obtenir un tel cintrage, il est par exemple prévu que le fond 42 soit découpé en une zone centrale 50 de part et d'autre de laquelle se trouvent une zone d'extrémité avant 52 et une zone d'extrémité arrière 54, et que ces zones 50, 52, 54 soient légèrement inclinées les unes par rapport aux autres comme le montre la figure 5. Plus précisément, ces zones 50, 52, 54 sont de préférence chacune droite et toutes les trois réalisées d'un seul tenant, la zone centrale 50 pouvant alors être orientée selon la direction 26, et les deux zones d'extrémité 52, 54 légèrement inclinées par rapport à cette même direction de manière à se rapprocher de l'ouverture du logement en allant vers la zone centrale 50.

La forme cintrée du fond 42 spécifique à la présente invention implique que le bandeau 24 de forme cylindrique ne peut être au contact de ce fond 42 sur toute sa longueur. C'est la raison pour laquelle le mode de réalisation préféré envisagé prévoit que le bandeau 24 est au contact du fond 42 du logement 32 sur toute la longueur de la zone centrale 50 de ce fond, mais en revanche dépourvu de contact avec les deux zones d'extrémité 52, 54, desquels il est légèrement écarté.

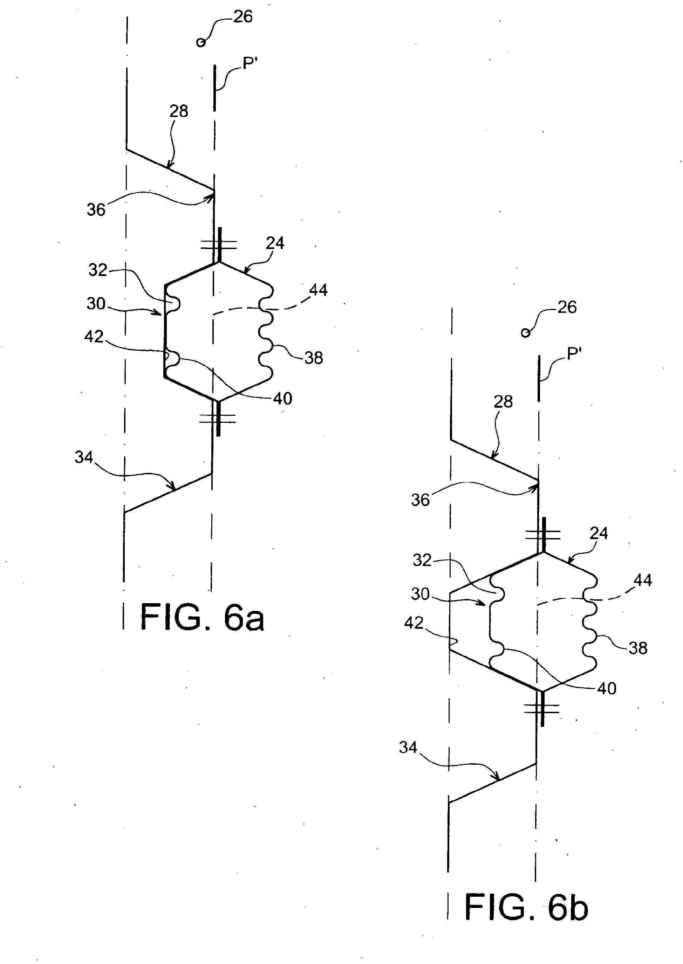

Cela est parfaitement illustré par les figures 6a et 6b sur lesquelles on peut apercevoir qu'au niveau de la zone centrale du fond tel que représenté sur la figure 6a, ce fond 42 est rapproché de l'ouverture 44 engendrant de ce fait un contact avec la paroi intérieure 40 du bandeau 24, dont on peut clairement apercevoir la forme préférentielle ondulée. Sur cette figure 6a, on peut également voir que dans ce mode de réalisation préféré, la paroi extérieure 38 est effectivement située entièrement en dehors du logement 32, comme cela a été mentionné précédemment et impliquant que l'ouverture 44 est initialement traversée par le bandeau 29 non déployé. En revanche, au niveau de la zone d'extrémité avant 52 du fond tel que représenté sur la figure 6b, ce fond 42 est plus éloigné de l'ouverture 44, ce qui implique une absence de contact entre ce fond et le bandeau 24 présentant la même section que celle montrée sur la figure 6a, et dont la paroi extérieure 38 est toujours située entièrement en dehors du logement 32, c'est-à-dire au-delà de l'ouverture 44 qui est donc aussi traversée par le bandeau 24.

Au vu de ce qui précède, on peut donc comprendre que le fond 42 dispose d'une surface de contact, avec le bandeau 24, qui est concave dans le direction longitudinale 26, alors que les deux extrémités libres du U du logement 32 se situent quant à elles préférentiellement dans un même plan vertical P' parallèle à cette direction 26, de préférence sur toute la longueur du renfort 28.

A cet égard, comme cela est aussi visible sur la figure 6b, il est également précisé que les portions d'extrémité longitudinales 34, 36 sont conçues de manière à ce que le renfort 28 présente, en section transversale, sensiblement la forme d'un ligne comprenant plusieurs creux/créneaux se succédant, parmi lesquels on compte bien entendu le U du logement 32. Cela permet d'obtenir un renfort 28 dont la forme des extrémités avant et arrière assure aisément la conservation des contact avec les pieds de montant de la caisse, durant un choc frontal survenant sur le véhicule.

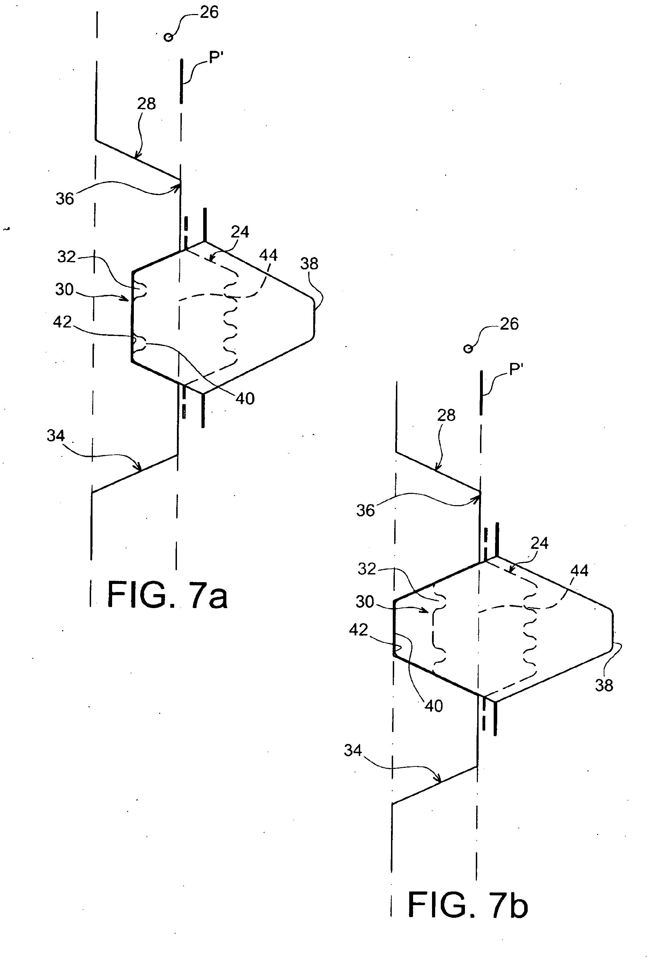

Enfin, les figures 7a et 7b montrent qu'après le déploiement du bandeau 24 ordonné suite à la détection d'un choc, la paroi intérieure 40 de celui-ci n'est plus seulement au contact de la zone centrale du fond 42, mais en contact avec ce même fond sur préférentiellement toute la longueur du bandeau. Ainsi, il doit être compris que même si le déploiement du bandeau 24 a pour conséquence de remplir l'espace laissé initialement libre entre la paroi intérieure 40 et le fond 42, le bandeau 24 se déploie essentiellement dans la direction allant du fond formant obstacle au déploiement vers l'ouverture, voire exclusivement dans cette même direction privilégiée au niveau de la zone centrale du fond où le contact entre le bandeau 24 et ce même fond 42 était déjà existant.

La forme cintrée du fond 42 permet également de donner une forme sensiblement identique au bandeau déployé 24 épousant ce même fond sur sensiblement toute la longueur de ce bandeau. De ce fait, ce dernier présente avantageusement une forme sensiblement arquée vers l'extérieur lorsqu'il est dans son état déployé, ce qui lui permet de limiter fortement les risques de flambage auxquels il est confronté durant le choc. A ce titre, il est noté que le déploiement susvisé a pour conséquence de diminuer, voire de faire disparaître les ondulations sur les parois 38, 40, comme cela est montré sur les figures 7a et 7b sur lesquelles le bandeau dans son état normal non déployé a également été représenté en pointillés pour faciliter la compréhension de l'invention.

Bien entendu, diverses modifications peuvent être apportées par l'homme du métier à l'agencement de bandeau et à la porte latérale de véhicule automobile qui viennent d'être décrits, uniquement à titre d'exemples non limitatifs.

## Revendications

1. Agencement de bandeau (20) pour une porte latérale (1) de véhicule automobile comportant un caisson (2) forme d'une paroi extérieure (4) et d'un paroi intérieure (8) à l'intérieur duquel pénètre au moins partiellement une partie d'une vitre (16), ledit agencement étant agencé au sein du caisson (2) entre la paroi intérieure (8) et la partie de vitre (16) située à l'intérieur du caisson et comportant un bandeau (24) longitudinal de porte formant structure déployable, qui est susceptible de se déployer en direction de l'extérieur de la porte jusqu'à proximité du panneau extérieur (4) du caisson (2), **caractérisé en ce qu'**il comprend en outre un renfort longitudinale de bandeau (28) formant logement (32) pour ledit bandeau (24) de porte, ce logement présentant un fond (42) et une ouverture (44) s'étendant le long dudit bandeau (24).

2. Agencement de bandeau (20) selon la revendication 1, **caractérisé en ce que** ledit fond de logement (42) comporte le long dudit bandeau longitudinal de porte (24) une zone centrale (50) de part et d'autre de laquelle se trouvent deux zones d'extrémité (52, 54), et **en ce que** ledit fond (42) dispose d'une forme cintrée rapprochant ladite parte centrale (50) de ladite ouverture (44).

3. Agencement de bandeau (20) selon la revendication 1 ou la revendication 2, **caractérisé en ce que** ledit bandeau longitudinal de porte (24) est au moins partiellement en contact avec ledit fond du logement (42).

4. Agencement de bandeau (20) selon l'une quelconque des revendications précédentes, **caractérisé en ce que** ledit bandeau longitudinale de porte (24) comporte une paroi intérieure (40) située à l'intérieur
dudit logement (32) ainsi qu'une paroi extérieure (38) située extérieurement par rapport à ce même logement (32).

5. Agencement de bandeau (20) selon l'une quelconque des revendications précédentes, **caractérisé en ce que** ledit renfort longitudinal (28) comporte une portion centrale longitudinale (30) formant ledit logement (32) et présentant en section transversale sensiblement la forme d'un U, et **en ce que** ledit renfort longitudinal (28) comporte en outre deux portions d'extrémité longitudinales (34, 36) respectivement raccordées aux deux extrémités libres du U.

6. Agencement de bandeau (20) selon la revendication 5, **caractérisé en ce que** ledit bandeau longitudinal de porte (24) est monté fixement sur lesdites deux portions d'extrémité longitudinales (34, 36) du renfort.

7. Agencement de bandeau (20) selon la revendication 5 ou la revendication 6, **caractérisé en ce que** lesdites deux portion d'extrémité longitudinales (34, 36) sont conçues de manière à ce que le renfort présente, en section transversale, sensiblement la forme d'un ligne comprenant plusieurs creux/créneaux se succédant.

8. Agencement de bandeau (20) selon l'une quelconque des revendications précédentes, **caractérisé en ce que** ledit bandeau longitudinal de porte (24) formant structure déployable est muni d'un actionneur pyrotechnique, pour le gonflage de ce bandeau.

9. Porte latérale (1) de véhicule automobile, **caractérisée en ce qu'**elle comporte un agencement de bandeau (20) selon l'une quelconque des revendications précédentes, ledit agencement étant disposé de manière à ce que ledit fond (42) du logement (32) soit orienté vers un côté intérieur de ladite porte, et de manière à ce que ladite ouverture (44) du logement (32) soit orientée vers un côté extérieure de ladite porte.

10. Porte latérale (1) de véhicule selon la revendication 9, **caractérisée en ce qu'**elle comporte un caisson de porte (2) à l'intérieur duquel est monté fixement ledit renfort longitudinal (28) de l'agencement de bandeau (20), et **en ce qu'**elle comprend une vitre (16) pénétrant dans ledit caisson de porte (2) et disposée en regard dudit agencement (20), de manière à être située plus vers l'extérieur de la porte que ledit agencement (20).

11. Porte latérale (1) de véhicule selon la revendication 10, **caractérisée en ce que** ledit agencement de bandeau (20) est agencé de manière à ce qu'un déploiement du bandeau longitudinal (24) entraîne une percussion de ladite vitre (16) par ce même bandeau (24).

12. Véhicule automobile **caractérisé en ce qu'**il comporte au moins une porte latérale (1) selon l'une quelconque des revendications 9 à 11.

## Claims

1. Strip arrangement (20) for a side door (1) of a motor vehicle comprising a box structure (2) formed of an outer wall (4) and of an inner wall (8) inside which part of a window (16) at least partially penetrates, the said arrangement being arranged within the box structure (2) between the inner wall (8) and that part of the window (16) that is situated inside the box structure and comprising a longitudinal door strip (24) that forms a deployable structure capable of deploying towards the outside of the door as far as close proximity to the outer panel (4) of the box structure (2), **characterized in that** it further comprises a longitudinal strip reinforcement (28) forming a housing (32) for the said door strip (24), this housing having a closed end (42) and an opening (44) extending along the length of the said strip (24).

2. Strip arrangement (20) according to Claim 1, **characterized in that** the said closed end (42) of the housing (42) comprises, along the length of the said longitudinal door strip (24), a central region (50) on each side of which there are two end regions (52, 54) and **in that** the said closed end (42) has a bent shape bringing the said central part (50) to meet the said opening (44).

3. Strip arrangement (20) according to Claim 1 or Claim 2, **characterized in that** the said longitudinal door strip (24) is at least partially in contact with the said closed end (42) of the housing (42).

4. Strip arrangement (20) according to any one of the preceding claims, **characterized in that** the said longitudinal door strip (24) comprises an inner wall (40) situated on the inside of the said housing (32) and an outer wall (38) situated on the outside in relation to this same housing (32).

5. Strip arrangement (20) according to any one of the preceding claims, **characterized in that** the said longitudinal reinforcement (28) comprises a longitudinal central portion (30) forming the said housing (32) and having substantially the shape of a U in cross section, and **in that** the said longitudinal reinforcement (28) further comprises two longitudinal end portions (34, 36) which are respectively connected to the two free ends of the U.

6. Strip arrangement (20) according to Claim 5, **characterized in that** the said longitudinal door strip (24) is fixedly mounted on the said two longitudinal end portions (34, 36) of the reinforcement.

7. Strip arrangement (20) according to Claim 5 or Claim 6, **characterized in that** the said two longitudinal end portions (34, 36) are designed so that in cross section the reinforcement is substantially in the shape of a line comprising a succession of several crenels/ribs.

8. Strip arrangement (20) according to any one of the preceding claims, **characterized in that** the said longitudinal door strip (24) that forms a deployable structure is fitted with a pyrotechnic actuator to inflate this strip.

9. Motor vehicle side door (1), **characterized in that** it comprises a strip arrangement (20) according to any one of the preceding claims, said arrangement being arranged in such a way that the said closed end (42) of the housing (32) is directed towards an interior side of the said door, and in such a way that the said opening (44) of the housing (32) is directed towards an exterior side of the said door.

10. Vehicle side door (1) according to Claim 9, **characterized in that** it comprises a door box structure (2) inside which the said longitudinal reinforcement (28) of the strip arrangement (20) is fixedly mounted, and **in that** it comprises a window (16) that penetrates the said door box structure (2) and is positioned facing the said arrangement (20) so that it is situated further towards the outside of the door than is the said arrangement (20).

11. Vehicle side door (1) according to Claim 10, **characterized in that** the said strip arrangement (20) is arranged in such a way that deployment of the longitudinal strip (24) causes the said window (16) to be struck by this same strip (24).

12. Motor vehicle **characterized in that** it comprises at least one side door (1) according to any one of Claims 9 to 11.

## Patentansprüche

1. Leistenanordnung (20) für eine Seitentür (1) eines Kraftfahrzeugs, die einen von einer Außenwand (4) und von einer Innenwand (8) gebildeten Kasten (2) aufweist, in dessen Inneres ein Teil einer Glasscheibe (16) zumindest teilweise eindringt, wobei die Anordnung innerhalb des Kastens (2) zwischen der Innenwand (8) und dem innerhalb des Kastens befindlichen Glasscheibenteil (16) angeordnet ist und eine Türlängsleiste (24) aufweist, die eine ausbreitbare Struktur bildet, welche sich in Richtung der Außenseite der Tür bis in die Nähe der Außenplatte (4) des Kastens (2) ausbreiten kann, **dadurch gekennzeichnet, dass** sie außerdem eine Leistenlängsverstärkung (28) enthält, die eine Aufnahme (32) für die Türleiste (24) bildet, wobei diese Aufnahme einen Boden (42) und eine Öffnung (44) aufweist, die sich entlang der Leiste (24) erstrecken.

2. Leistenanordnung (20) nach Anspruch 1, **dadurch gekennzeichnet, dass** der Aufnahmeboden (42) entlang der Türlängsleiste (24) eine zentrale Zone (50) aufweist, zu deren beiden Seiten sich zwei Endzonen (52, 54) befinden, und dass der Boden (42) über eine gebogene Form verfügt, die den zentralen Bereich (50) der Öffnung (44) annähert.

3. Leistenanordnung (20) nach Anspruch 1 oder Anspruch 2, **dadurch gekennzeichnet, dass** die Türlängsleiste (24) zumindest zum Teil mit dem Aufnahmeboden (42) in Kontakt ist.

4. Leistenanordnung (20) nach einem der vorhergehenden Ansprüche, **dadurch gekennzeichnet, dass** die Türlängsleiste (24) eine Innenwand (40), die sich innerhalb der Aufnahme (32) befindet, sowie eine Außenwand (38) aufweist, die sich bezüglich dieser gleichen Aufnahme (32) außen befindet.

5. Leistenanordnung (20) nach einem der vorhergehenden Ansprüche, **dadurch gekennzeichnet, dass** die Längsverstärkung (28) einen zentralen Längsabschnitt (30) aufweist, der die Aufnahme (32) bildet und im Querschnitt im Wesentlichen die Form eines U hat, und dass die Längsverstärkung (28) außerdem zwei Längsendabschnitte (34, 36) aufweist, die je an die zwei freien Enden des U anschließen.

6. Leistenanordnung (20) nach Anspruch 5, **dadurch gekennzeichnet, dass** die Türlängsleiste (24) ortsfest an die zwei Längsendabschnitte (34, 36) der Verstärkung montiert ist.

7. Leistenanordnung (20) nach Anspruch 5 oder Anspruch 6, **dadurch gekennzeichnet, dass** die zwei Längsendabschnitte (34, 36) so konzipiert sind, dass die Verstärkung im Querschnitt im Wesentlichen die Form einer Linie aufweist, die mehrere aufeinanderfolgende Vertiefungen/Zacken enthält.

8. Leistenanordnung (20) nach einem der vorhergehenden Ansprüche, **dadurch gekennzeichnet, dass** die eine ausbreitbare Struktur bildende Türlängsleiste (24) mit einem pyrotechnischen Aktor zum Aufblähen dieser Leiste versehen ist.

9. Kraftfahrzeug-Seitentür (1), **dadurch gekennzeichnet, dass** sie eine Leistenanordnung (20) nach einem der vorhergehenden Ansprüche aufweist, wobei die Anordnung so angeordnet ist, dass der Boden (42) der Aufnahme (32) zu einer Innenseite der Tür gerichtet und die Öffnung (44) der Aufnahme (32) zu einer Außenseite der Tür gerichtet ist.

10. Fahrzeug-Seitentür (1) nach Anspruch 9, **dadurch gekennzeichnet, dass** sie einen Türkasten (2) aufweist, in dessen Innerem die Längsverstärkung (28) der Leistenanordnung (20) ortsfest montiert ist, und dass sie eine Glasscheibe (16) enthält, die in den Türkasten (2) eindringt und gegenüber der Anordnung (20) so angeordnet ist, dass sie sich weiter zur Außenseite der Tür hin befindet als die Anordnung (20).

11. Fahrzeug-Seitentür (1) nach Anspruch 10, **dadurch gekennzeichnet, dass** die Leistenanordnung (20) so angeordnet ist, dass ein Ausbreiten der Längsleiste (24) zu einem Aufschlag auf die Glasscheibe (16) durch diese Leiste (24) führt.

12. Kraftfahrzeug, **dadurch gekennzeichnet, dass** es mindestens eine Seitentür (1) nach einem der Ansprüche 9 bis 11 aufweist.
